# EUROPÄISCHE PATENTSCHRIFT

(11) **EP 3 304 403 B1**
(45) Veröffentlichungstag und Bekanntmachung des Hinweises auf die Patenterteilung: **09.06.2021**
(21) Anmeldenummer: 16711238.2
(22) Anmeldetag: 18.03.2016
(51) Int. Cl.: G06F 21/57

(54) **VERFAHREN ZUM SICHEREN BOOTEN EINES COMPUTERSYSTEMS UND COMPUTERSYSTEM**
METHOD FOR THE SECURE BOOTING OF A COMPUTER SYSTEM AND COMPUTER SYSTEM
PROCÉDÉ POUR L'AMORÇAGE SÛR D'UN SYSTÈME INFORMATIQUE ET SYSTÈME INFORMATIQUE

(30) Priorität: 29.05.2015 DE 102015108504
(43) Veröffentlichungstag der Anmeldung: 11.04.2018
(73) Patentinhaber: Fujitsu Client Computing Limited, Kawasaki-shi, Kanagawa-ken 211-8588 (JP)
(72) Erfinder: FILIMON, Diana, 86368 Gersthofen (DE); ATZKERN, Jürgen, 86505 Münsterhausen (DE); CESTONARO, Thilo, 86199 Augsburg (DE); BRUDEREK, Timo, 86500 Kutzenhausen (DE)
(74) Vertreter: Epping - Hermann - Fischer
(86) Internationale Anmeldenummer: PCT/EP2016/055968
(87) Internationale Veröffentlichungsnummer: WO 2016/192867

(56) Entgegenhaltungen:
- EP-A2- 1 953 666
- US-A1- 2009 193 211
- US-A1- 2009 327 678
- GARFINKEL T: "Terra: a virtual machine-based platform for trusted computing", ACM SOSP. PROCEEDINGS OF THE ACM SYMPOSIUM ON OPERATING SYSTEMSPRINCIPLES; 20031019, 19. Oktober 2003 (2003-10-19), Seiten 193-206, XP002340992,

## Beschreibung

Die Erfindung betrifft ein Verfahren zum sicheren Booten eines Computersystems sowie ein Computersystem mit einer Einrichtung zum Überprüfen von Programmcode eines Bootloaders.

In Computersystemen mit sicherheitskritischen Anwendungen ist es notwendig, bereits das Booten des Computersystems zu überprüfen und zu sichern. Derartige Computersysteme werden beispielsweise zur Authentifizierung bei oder zum Ausführen von Bezahlvorgängen von Benutzern verwendet. Ein Benutzer kann sich hierbei durch Eingabe von Codes oder biometrischen Daten authentifizieren. Um unberechtigten Dritten zu erschweren, auf das Computersystem zuzugreifen und somit Zugriffe auf personenbezogene Daten zu erlangen, werden beim Booten des Computersystems die Software, Firmware und die Prozesse des Bootens an sich überprüft. Somit kann sichergestellt werden, dass sichere und originale Firmware und Hardware das Booten innerhalb des Computersystems ausführen.

Die US 2009/0193211 A1 beschreibt ein Überprüfen von Programmcode während eines Bootens eines Computersystems. Ein erster Teil eines Bootloaders wird bei einem Anschalten des Computersystems ausgeführt. Funktionen des ersten Teils des Bootloaders umfassen eine Authentifizierung eines zweiten Teils eines Bootloaders und eines sicheren Datenblocks, der in einem nichtflüchtigen Speicher gespeichert ist, sowie das Laden des zweiten Teils des Bootloaders in einen flüchtigen Speicher, um den zweiten Teil des Bootloaders anschließend mit einem Prozessor auszuführen

Die US 2009/327678 A1 beschreibt ein System zur Durchführung einer Pre-Boot Sicherheitsverifikation. Das System umfasst einen Prozessor und Speicher, einen integrierten Mikrocontroller mit einem Hilfsspeicher und wenigstens eine Pre-Boot Sicherheitskomponente, die mit dem Mikrokontroller verbunden ist. Der integrierte Mikroprozessor greift bei einem Start des Systems auf den Hilfsspeicher zu, bevor der Prozessor gebootet wird. In dem Hilfsspeicher sind Instruktionen zur Verifikation der Sicherheit des Systems gespeichert. Nachdem die Sicherheit des Systems verifiziert ist, wird das Booten des Prozessors aufgerufen.

Die EP 1953666 A2 beschreibt ein Verfahren zum Booten eines elektronischen Geräts mit einem Hauptprozessor (CPU) und einem Sicherheitsmodul. Die CPU beginnt, bei einem Neustart oder Einschalten, ein System unter Verwendung von Boot-Informationen zu booten. Wird durch das Sicherheitsmodul von der CPU kein Authentifizierungs-Startbefehl innerhalb einer vorbestimmten Zeitspanne nach dem Neustart oder Einschalten empfangen, überprüft das Sicherheitsmodul einen Betrieb der CPU. Das Sicherheitsmodul authentifiziert, wenn die Authentisierungs-Startanweisung empfangen wird, bevor die erste vorbestimmte Zeitspanne abläuft, die Boot-Informationen und steuert den Betrieb der CPU auf der Grundlage eines Authentisierungsergebnisses.

Es ist Aufgabe der Erfindung, ein verbessertes Verfahren zum Betrieb eines derartigen Computersystems und ein verbessertes Computersystem aufzuzeigen Die Erfindung ist durch die unabhängigen Ansprüche definiert.

Gemäß einem Aspekt der Erfindung wird die Aufgabe durch ein Verfahren zum sicheren Booten eines Computersystems gelöst. Das Verfahren umfasst hierbei die Schritte:
- Ausführen von Programmcode wenigstens eines Bootloaders zum Laden eines Kernels;
- Überprüfen des Programmcodes des Bootloaders, nachdem wenigstens ein Teil des Programmcodes des Bootloaders ausgeführt wurde und während der Kernel geladen wird; und
- Unterbrechen des Bootens, wenn ein Ergebnis des Überprüfens des Programmcodes des Bootloaders auf eine Manipulation des Programmcodes des Bootloaders hinweist.

Nach dem Starten des Computersystems wird ein Bootloader ausgeführt. Durch den Bootloader wird das Laden eines Kernels des Computersystems initiiert. Der Programmcode des Bootloaders wird überprüft, nachdem wenigstens ein Teil des Programmcodes des Bootloaders ausgeführt wurde. Durch das Überprüfen des Bootloaders, nachdem ein Teil des Programmcodes des Bootloaders bereits ausgeführt wurde, kann das Computersystem schneller gebootet werden, als wenn Programmcode des Bootloaders überprüft würde, bevor der Bootloader ausgeführt wird.

Wird beim Überprüfen erkannt, dass der Programmcode des Bootloaders manipuliert wurde, wird das Booten unterbrochen. Somit bleibt die Sicherheit des Computersystems erhalten, da das Computersystem nicht vollständig bootet, ohne eine Überprüfung des Bootloaders durchzuführen.

In diesem Zusammenhang umfasst das Booten den Ablauf in dem Computersystem von einem Anschaltsignal bis hin zum Einnehmen eines normalen Betriebszustands.

Gemäß einer vorteilhaften Ausgestaltung umfasst das Computersystem einen Hauptprozessor und einen Cryptoprozessor. Hierbei wird der Kernel durch den Hauptprozessor geladen. Die Überprüfung wird in dem Cryptoprozessor ausgeführt. Der Cryptoprozessor führt auch das Unterbrechen des Bootens aus, insbesondere durch Senden eines Reset-Signals an den Hauptprozessor.

Die Überprüfung des Programmcodes des Bootloaders durch einen Cryptoprozessor führt zu einem hohen Sicherheitsstandard. Die Überprüfung durch den Cryptoprozessor wird parallel zu dem Booten des Computersystems durchgeführt. Hierdurch wird das Booten im Vergleich zu einem Booten mit vorhergehendem Überprüfen beschleunigt.

Gemäß einer weiteren vorteilhaften Ausgestaltung wird der Schritt des Überprüfens ausgeführt, nachdem ein Ausführen des Programmcodes des Bootloaders abgeschlossen und wenigstens ein Teil des Kernels geladen wurde.

Der Programmcode des Bootloaders ist in irgendeinem Speicher gespeichert, der separat angesprochen werden kann, wie beispielsweise einem nicht-flüchtigen Speicherbaustein, insbesondere einem SPI-Baustein. Nach dem Laden des Kernels greift der Hauptprozessor nicht auf den Speicher des Programmcodes des Bootloaders zu, sodass die Überprüfung von dem vom Hauptprozessor unabhängigen Cryptoprozessor ausgeführt werden kann.

Gemäß einer weiteren vorteilhaften Ausgestaltung wird der Schritt des Überprüfens nach Ablauf einer vorbestimmten Zeit ausgeführt, nachdem das Laden des Kernels gestartet wurde.

Um einen reibungsfreien zeitlichen Ablauf der Überprüfung in dem Bootvorgang zu gewährleisten, kann durch eine Zeitvorgabe, die mit dem Starten des Ladens des Kernels beginnt, festgelegt werden, zu welchem Zeitpunkt die Überprüfung stattfinden soll.

Gemäß einer weiteren vorteilhaften Ausgestaltung umfasst der Schritt des Unterbrechens ein Anhalten des Hauptprozessors.

Durch das Anhalten des Hauptprozessors wird der Bootvorgang unterbrochen. Das Computersystem kommt nicht in einen normalen Betriebszustand, in dem Schadsoftware ausführbar wäre. Eventuell bereits gestartete Schadprogramme werden ebenso abgebrochen, wie der Bootvorgang selbst. Insbesondere wird der Hauptprozessor durch einen Reset angehalten. Beispielsweise wird die Versorgungsspannung des Hauptprozessors unterbrochen.

Gemäß einer weiteren vorteilhaften Ausgestaltung umfasst das Computersystem zusätzlich einen Multiplexer und einen SPI-Baustein. In dem SPI-Baustein ist der Programmcode des wenigstens einen Bootloaders gespeichert. An dem Multiplexer sind der Hauptprozessor, der Cryptoprozessor und der SPI-Baustein elektrisch angeschlossen. In dieser Ausgestaltung wird vor dem Schritt des Ausführens zusätzlich der folgende Schritt ausgeführt:
- Schalten des Multiplexers durch den Cryptoprozessor, so dass eine elektrische Verbindung von dem SPI-Baustein zu dem Hauptprozessor aufgebaut wird.

Nach einem Einschaltsignal konfiguriert der Cryptoprozessor den Multiplexer so, dass zwischen dem SPI-Baustein und dem Hauptprozessor eine Verbindung aufgebaut wird. Hierdurch kann der Hauptprozessor aus dem SPI-Baustein heraus den Programmcode des wenigstens einen Bootloaders laden.

Gemäß einer weiteren vorteilhaften Ausgestaltung führt der Cryptoprozessor nach dem Schritt des Ausführens des Programmcodes des wenigstens einen Bootloaders zusätzlich folgenden Schritt aus, bevor der Schritt des Überprüfens ausgeführt wird:
- Schalten des Multiplexers durch den Cryptoprozessor, sodass eine elektrische Verbindung von dem SPI-Baustein zu dem Cryptoprozessor aufgebaut wird.

Für den Schritt des Überprüfens wird zwischen dem Cryptoprozessor und dem SPI-Baustein eine elektrische Verbindung hergestellt. Diese wird durch das Schalten des Multiplexers durch den Cryptoprozessor aufgebaut. Hierbei wird eine elektrische Verbindung zwischen dem SPI-Baustein und dem Hauptprozessor unterbrochen. Der Hauptprozessor führt während der Überprüfung des Programmcodes des Bootloaders den Kernels aus. Der Kernel muss hierbei nicht auf den SPI-Baustein zugreifen. Somit kann der Cryptoprozessor zur gleichen Zeit den Inhalt des SPI-Baustein überprüfen. Anschließend kann eine Verbindung zwischen SPI-Baustein und dem Hauptprozessor durch den Cryptoprozessor wieder hergestellt werden.

Gemäß einem zweiten Aspekt der Erfindung wird die Aufgabe durch ein Computersystem mit einem Speicher für einen Programmcode eines Bootloaders, einem Hauptprozessor und einer Einrichtung zum Überprüfen des Programmcodes des Bootloaders gelöst. Hierbei ist der Hauptprozessor dazu eingerichtet, den Bootloader auszuführen und einen Kernel zu laden. Die Einrichtung ist mit dem Speicher und dem Hauptprozessor elektrisch gekoppelt. Die Einrichtung ist dazu eingerichtet, eine Überprüfung des Programmcodes des Bootloaders durchzuführen, nachdem wenigstens ein Teil des Programmcodes des Bootloaders ausgeführt wurde und während der Kernel geladen wird. Des Weiteren ist die Einrichtung dazu eingerichtet, ein Booten des Computersystems zu unterbrechen, wenn die Überprüfung des Programmcodes des Bootloaders auf eine Manipulation des Programmcodes des Bootloaders hinweist.

Ein derartiges Computersystem kann schnell booten, bei gleichzeitig hohem Sicherheitsstandard.

Gemäß einer vorteilhaften Ausgestaltung umfasst die Einrichtung zum Überprüfen des Programmcodes des Bootloaders einen Cryptoprozessor.

Gemäß einer weiteren vorteilhaften Ausgestaltung weist das Computersystem einen SPI-Baustein auf, in dem der Speicher angeordnet ist.

Gemäß einer weiteren vorteilhaften Ausgestaltung umfasst die elektrische Kopplung der Einrichtung mit dem Speicher und dem Hauptprozessor einen Multiplexer.

Vorteile bezüglich des zweiten Aspekts ergeben sich aus den Vorteilen bezüglich des ersten Aspekts sowie den nachfolgend beschriebenen Ausführungsbeispielen.

Die Erfindung wird im Folgenden anhand von Figuren beschrieben. In den Figuren zeigen:
- Figur 1: ein Computersystem gemäß einer Ausgestaltung der Erfindung;
- Figur 2: ein Ablaufdiagramm eines Verfahrens gemäß einer Ausgestaltung der Erfindung; und
- Figur 3: eine weitere Ausgestaltung des Computersystems.

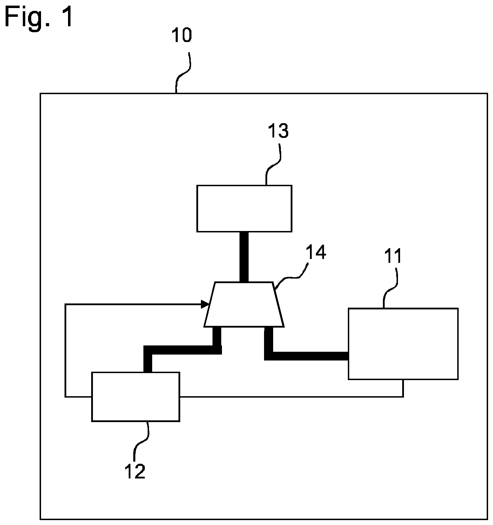

Figur 1 zeigt eine schematische Darstellung eines Computersystems 10. Im dargestellten Ausführungsbeispiel ist das Computersystem 10 ein Bezahlterminal, mit dem ein Benutzer elektronische Zahlvorgänge vornehmen kann. In anderen Ausgestaltungen kann es sich bei dem Computersystem 10 beispielsweise um ein Mobiltelefon, einen Tablet-PC oder einen Desktop-PC handeln. Selbstverständlich sind auch weitere Arten von Computersystemen vorstellbar.

Das Computersystem 10 weist einen Hauptprozessor 11 auf. Der Hauptprozessor 11 dient dazu, Prozesse des Computersystems 10 auszuführen. Beispielsweise läuft ein Betriebssystem auf dem Hauptprozessor 11 ab. Im Ausführungsbeispiel handelt es sich bei dem Hauptprozessor 11 um ein sogenanntes System on a Chip. Hierbei fallen dem Hauptprozessor 11 verschiedene Funktionen zu, die beispielsweise in anderen Ausgestaltungen, wie einem Desktop-PC, auf verschiedene Komponenten verteilt sein können.

Das Computersystem 10 weist des Weiteren einen Speicherbaustein mit einem seriellen peripheren Anschluss (engl.: serial peripheral interface, kurz: SPI) auf. Dieser Der SPI-Baustein 13 umfasst im Ausführungsbeispiel einen Speicherbereich, auf dem Programmcode eines Bootloaders gespeichert ist. Der Bootloader umfasst hierbei einen Bootloader einer ersten Ebene und einen Bootloader einer zweiten Ebene. Nach einem Anschaltsignal des Computersystems 10 und einer Initialisierung des Bootloaders der ersten Ebene (engl.: first stage boot loader) wird der Bootloader der zweiten Ebene (engl.: second stage boot loader) automatisch von dem Bootloader der ersten Ebene gestartet und anschließend ausgeführt. Die Aufgabe der Bootloader ist es, das Computersystem 10 auf ein Laden des Betriebssystems und somit auf einen normalen Betriebszustand vorzubereiten. Insbesondere umfasst das Booten das Ausführen eines Systembootstrap, eines Bootloaders erster Ebene und eines Bootloaders zweiter Ebene sowie das vollständige Laden eines Kernels, eines Initialisierungsdateisystems und eines Rootdateisystems (initram file system, root file system).

Durch den Hauptprozessor 11 wird zum Ausführen eines Betriebssystems ein Kernel geladen. Das Laden des Kernels wird durch den Bootloader der zweiten Ebene initialisiert. Der Hauptprozessor lädt den Kernel hierbei aus einem weiteren Speicher, der mit dem Hauptprozessor verbunden ist. In einer weiteren Ausführungsform lädt der Hauptprozessor den Kernel aus dem SPI-Baustein 13.

Im Ausführungsbeispiel sind der Hauptprozessor 11 und der SPI-Baustein 13 über einen Multiplexer 14 verbunden. Zusätzlich ist an dem Multiplexer 14 ein Cryptoprozessor 12 angeschlossen. Im bevorzugten Ausführungsbeispiel ist der Cryptoprozessor 12 ein Chip, der einen hohen Sicherheitsstandard aufweist und dessen Firmware für Sicherheitsüberprüfungen programmiert werden kann. Der Cryptoprozessor 12 kann den Multiplexer 14 ansteuern. Insbesondere kann der Cryptoprozessor 12 eine Verbindung des SPI-Bausteins 13 von dem Hauptprozessor 11 zu dem Cryptoprozessor 12 umschalten. Hierbei sind dann entweder der Cryptoprozessor 12 oder der Hauptprozessor 11 mit dem SPI-Baustein 13 elektrisch gekoppelt.

Der Cryptoprozessor 12 ist des Weiteren mit dem Hauptprozessor 11 elektronisch gekoppelt, sodass der Cryptoprozessor 12 wenigstens ein Reset-Signal an den Hauptprozessor 11 senden kann.

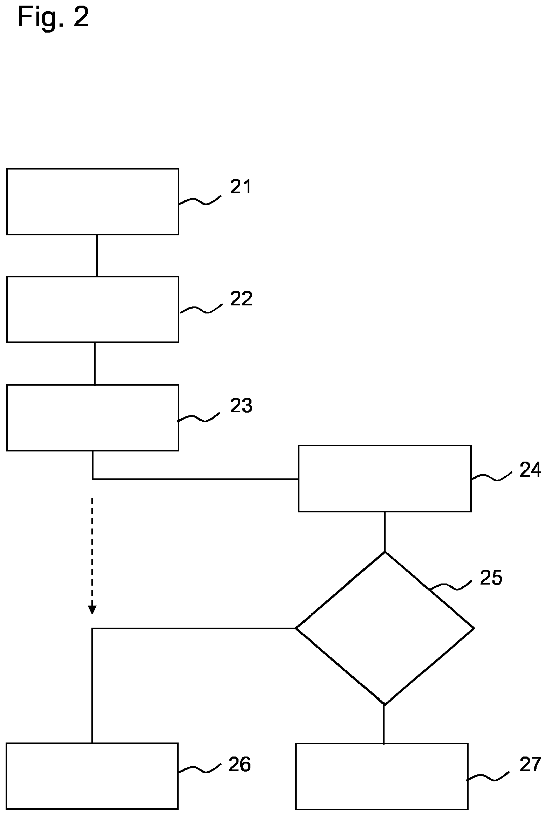

Figur 2 zeigt ein Flussdiagramm für ein Verfahren zum Betrieb des Computersystems 10 gemäß dem oben beschriebenen Ausführungsbeispiel. Nach dem Starten des Computersystems 10 steuert der Cryptoprozessor 12 den Multiplexer 14 so an, dass der Multiplexer eine elektrische Verbindung zwischen dem SPI-Baustein 13 und dem Hauptprozessor 11 herstellt.

Im Schritt 22 wird der Bootloader geladen und ausgeführt. Dies umfasst das Laden und Ausführen des Bootloaders erster Stufe und des Bootloaders zweiter Stufe. Hierbei wird der Bootloader zweiter Stufe von dem Bootloader erster Stufe geladen, da der Speicher des Bootloaders der ersten Stufe zu gering ist, um alle Peripherie anzusprechen und zu initialisieren.

Nach dem Ausführen des Bootloaders in Schritt 22 wird im Hauptprozessor 11 das Laden des Kernels in Schritt 23 gestartet. Im Ausführungsbeispiel greift der Hauptprozessor 11 während des Ladens des Kernels nicht auf den SPI-Baustein 13 zu.

Da der SPI-Baustein 13 nicht von dem Hauptprozessor 11 angesprochen wird, während der Kernel lädt, kann der Cryptoprozessor 12 auf den SPI-Baustein 13 zugreifen und die sicherheitsrelevante Überprüfung des Programmcodes des Bootloaders durchführen. Hierzu steuert der Cryptoprozessor 12 in Schritt 24 den Multiplexer so an, dass zwischen dem SPI-Baustein 13 und dem Cryptoprozessor 12 eine elektrische Verbindung hergestellt wird. Die elektrische Verbindung zwischen dem SPI-Baustein 13 und dem Hauptprozessor 11 wird hierbei unterbrochen.

Im Ausführungsbeispiel schaltet der Cryptoprozessor 12 den Multiplexer 14 in Schritt 24 fünf Sekunden nach dem Starten des Ladens des Kernels in Schritt 23 um. In einer alternativen Ausgestaltung schaltet der Cryptoprozessor in Schritt 24 den Multiplexer nach einem Zeitablauf, der unmittelbar von dem ersten Schalten des Multiplexers in Schritt 21 abhängt. Hierbei wird dem Bootloader ein vorgegebener Zeitraum zum Initialisieren des Ladens des Kernels zur Verfügung gestellt.

Der Cryptoprozessor 12 beginnt nun in Schritt 25 den Programmcode, der in dem SPI-Baustein 13 gespeichert ist, zu überprüfen. Insbesondere wird der Programmcode des Bootloaders, beziehungsweise des Bootloaders der ersten Stufe und/oder des Bootloaders der zweiten Stufe überprüft.

Hierzu bildet der Cryptoprozessor 12 aus den Speicherdaten des SPI-Bausteins 13 einen Hashwert, den der Cryptoprozessor 12 anhand eines Referenzwertes überprüft. Hierzu ist der Referenzwert oder eine Vergleichstabelle mit dem Referenzwert in einem sicheren Speicher des Cryptoprozessors hinterlegt. In einem weiteren Ausführungsbeispiel ist der Referenzwert in einem externen, mit dem Cryptoprozessor verbundenen Speicher abgelegt.

Führt die Überprüfung zu einem positiven Ergebnis, ist anzunehmen, dass der Programmcode des Bootloaders in Ordnung ist. Das Computersystem 10 setzt den Bootvorgang bis zu Schritt 26 fort und beendet somit das Booten ohne Unterbrechung durch den Cryptoprozessor 12. Hierbei lädt der Hauptprozessor 11 den Kernel vollständig und startet im Anschluss ein Betriebssystem. Dass der Bootvorgang hierbei durch den Cryptoprozessor nicht beeinträchtigt wird, ist durch den gestrichelten Pfeil in Figur 2 angedeutet.

Ist das Ergebnis der Überprüfung in Schritt 25 negativ, so weist dies auf eine Manipulation des Programmcodes des Bootloaders im SPI-Baustein 13 hin. Der Cryptoprozessor 12 sendet nun in Schritt 27 ein Resetsignal an den Hauptprozessor 11. Durch das Resetsignal wird die Energieversorgung des Hauptprozessors 11 unterbrochen und der Bootvorgang unverzüglich abgebrochen. Im Ausführungsbeispiel wird das Resetsignal dem Hauptprozessor 11 über einen GPIO (engl.: general purpose input/output) Pin des Cryptoprozessors 12 gesendet.

Zusammen mit dem Setzen des Reset-Signals kann die Crypto-Firmware des Cryptoprozessors zusätzlich eine Markierung in einem sogenannten Tamperregister setzen. Hierdurch wird hinterlegt, dass eine Manipulation detektiert wurde. Über eine Statusanzeige, wie beispielsweise eine LED-Anzeige, kann ein Warnsignal ausgegeben werden. Die Statusanzeige ist sowohl am Hauptprozessor 11 als auch am Cryptoprozessor 12 angeschlossen. Durch das Setzen des Reset-Signals am Hauptprozessor 11 ist er ohne Spannung und hat keinen Zugriff auf die Statusanzeige. Somit wird die Statusanzeige von dem Cryptoprozessor 12 gesteuert. So ist sichergestellt, dass die Statusanzeige, die eine Manipulation anzeigt, auch von dem Cryptoprozessor 12 gesteuert wird.

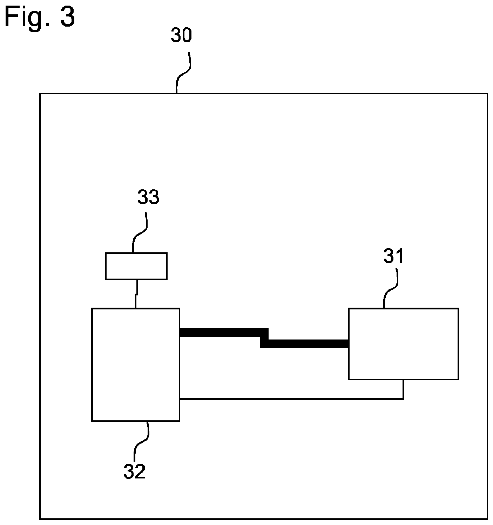

Eine alternative, in Figur 3 dargestellte Methode um ein sicheres und schnelles Booten des Computersystems 10 zu gewährleisten ist es, einen SPI-Baustein im Cryptoprozessor 32 zu emulieren. Hierbei weist ein Computersystem 30 keinen physikalischen SPI-Baustein auf, auf dem ein Bootloader gespeichert ist. Ebenso weist das Computersystem 30 keinen Multiplexer auf. Der Cryptoprozessor 32 ist elektronisch direkt mit einem Hauptprozessor 31 gekoppelt.

Empfängt der Cryptoprozessor ein Einschaltsignal, so startet der Cryptoprozessor 32 eine Emulierung eines SPI-Bausteins im Cryptoprozessor 32. Hierfür wird ein sicherer Speicherbereich 33 verwendet. Beim sicheren Speicherbereich 33 handelt es sich beispielsweise um ein Secure EEPROM. Der sichere Speicherbereich 33 ist über eine sichere Verbindung an den Cryptoprozessor 32 angeschlossen, auf den lediglich der Cryptoprozessor 32 Zugriff hat. In einem alternativen Ausführungsbeispiel befindet sich der sichere Speicherbereich 33 innerhalb des Cryptoprozessors 32.

Durch die Realisierung der Emulation eines SPI-Bausteins im sicheren Speicherbereich 33 des Cryptoprozessors 32 ist ein sicherer Anker zum Starten einer gesicherten Programmcodeüberprüfung im Bootloader der ersten Stufe geschaffen. Von diesem sicheren Anker kann weiterer Programmcode sicher ausgeführt werden. Der Cryptoprozessor 32 und die auf dem Cryptoprozessor 32 gespeicherte Firmware gilt als Trusted Element und somit als vertrauenswürdig. Eine Programmierung des im sicheren Speicherbereich 33 gespeicherten Bootloaders, bzw. des Programmcodes des Bootloaders kann ausschließlich über einen sicheren Algorithmus des Cryptoprozessors 32 erfolgen (Flashalgorithmus). Somit ist sichergestellt, dass keine unberechtigten Dritten Programmcode auf den Cryptoprozessor 32 aufspielen.

Nach der Emulation des Speicherbausteins kann aus dem Cryptoprozessor 32 heraus der Bootloader, insbesondere der Bootloader der ersten Stufe und der Bootloader der zweiten Stufe, ausgeführt werden. Da die Emulation des SPI-Bausteins 13 im Cryptoprozessor 32 stattfindet, ist keine Überprüfung des Programmcodes des Bootloaders notwendig. Das Computersystem 30 kann somit direkt Durchbooten und benötigt keine Unterbrechung oder Überprüfung des Programmcodes des Bootloaders.

### Bezugszeichenliste

- 10, 30: Computersystem
- 11, 31: Hauptprozessor
- 12, 32: Cryptoprozessor
- 13: SPI-Baustein
- 14: Multiplexer
- 33: sicherer Speicherbereich
- 21 - 27: Verfahrensschritte

## Patentansprüche

1. Verfahren zum sicheren Booten eines Computersystems (10) mit einem Hauptprozessor (11), einem Cryptoprozessor (12), einem Multiplexer (14) und einem SPI-Baustein (13), wobei in dem SPI-Baustein (13) Programmcode wenigstens eines Bootloaders gespeichert ist und an den Multiplexer (14) der Hauptprozessor (11), der Cryptoprozessor (12) und der SPI-Baustein (13) elektrisch angeschlossen sind, wobei das Verfahren die folgenden Schritte umfasst:
- Schalten des Multiplexers (14) durch den Cryptoprozessor (12), so dass eine elektrische Verbindung von dem SPI-Baustein (13) zu dem Hauptprozessor (11) aufgebaut wird;- Ausführen des Programmcodes des wenigstens einen Bootloaders zum Laden eines Kernels nach dem Schritt des Schaltens des Multiplexers, wobei der Kernel durch den Hauptprozessor (11) geladen wird;
- Schalten des Multiplexers (14) durch den Cryptoprozessor (12) nach dem Schritt des Ausführens des Programmcodes des wenigstens einen Bootloaders, und nach dem das Laden des Kernels gestartet wurde, so dass eine elektrische Verbindung von dem SPI-Baustein (13) zu dem Cryptoprozessor (12) aufgebaut und die elektrische Verbindung zwischen dem SPI-Baustein (13) und dem Hauptprozessor (11) unterbrochen wird;
- Überprüfen, während der Kernel geladen wird, des Programmcodes des Bootloaders durch den Cryptoprozessor (12) nachdem die elektrische Verbindung von dem SPI-Baustein (13) zu dem Cryptoprozessor (12) aufgebaut und wenigstens ein Teil des Programmcodes des Bootloaders ausgeführt wurde; und
- Unterbrechen des Bootens durch den Cryptoprozessor (12), wenn ein Ergebnis des Überprüfens des Programmcodes des Bootloaders auf eine Manipulation des Programmcodes des Bootloaders hinweist.

2. Verfahren nach Anspruch 1, wobei der Schritt des Überprüfens ausgeführt wird, nachdem ein Ausführen des Programmcodes des Bootloaders abgeschlossen und wenigstens ein Teil des Kernels geladen wurde.

3. Verfahren nach einem der Ansprüche 1 oder 2, wobei der Schritt des Überprüfens nach Ablauf einer vorbestimmten Zeit ausgeführt wird, nachdem das Laden des Kernels gestartet wurde.

4. Verfahren nach einem der Ansprüche 1 bis 3, wobei der Schritt des Unterbrechens ein Anhalten des Hauptprozessors (11) umfasst.

5. Computersystem (10) mit einem Speicher für einen Programmcode eines Bootloaders, einem Hauptprozessor (11) und einer Einrichtung zum Überprüfen des Programmcodes des Bootloaders, wobei der Hauptprozessor (11) dazu eingerichtet ist, den Programmcode des Bootloaders auszuführen und einen Kernel zu laden, und wobei die Einrichtung mit dem Speicher und dem Hauptprozessor (11) elektrisch gekoppelt ist und dazu eingerichtet ist, eine Überprüfung des Programmcodes des Bootloaders durchzuführen, nachdem wenigstens ein Teil des Programmcodes des Bootloaders ausgeführt wurde und während der Kernel geladen wird, und das Booten des Computersystems (10) zu unterbrechen, wenn ein Ergebnis des Überprüfens des Programmcodes des Bootloaders auf eine Manipulation des Programmcodes des Bootloaders hinweist, wobei die Einrichtung zum Überprüfen des Programmcodes des Bootloaders einen Cryptoprozessor (12) umfasst, wobei das Computersystem (10) einen SPI-Baustein (13) aufweist, in dem der Speicher angeordnet ist, wobei die elektrische Kopplung der Einrichtung mit dem Speicher und dem Hauptprozessor (11) einen Multiplexer umfasst,
und an den Multiplexer der Hauptprozessor, der Cryptoprozessor und der SPI-Baustein elektrisch angeschlossen sind,
wobei der Multiplexer durch den Cryptoprozessor (12) geschaltet wird, so dass eine elektrische Verbindung von dem SPI-Baustein (13) zu dem Hauptprozessor (11) aufgebaut wird,
wobei der Programmcode des wenigstens einen Bootloaders zum Laden eines Kernels nach dem Schritt des Schaltens des Multiplexers ausgeführt wird, wobei der Cryptoprozessor (12) dazu eingerichtet ist den Multiplexer nach dem Schritt des Ausführens des Programmcodes des wenigstens einen Bootloaders und nach dem das Laden des Kernels gestartet wurde so zu schalten, dass von dem SPI-Baustein (13) zu dem Cryptoprozessor (12) eine elektrische Verbindung aufgebaut und die elektrische Verbindung zwischen dem SPI-Baustein (13) und dem Hauptprozessor (11) unterbrochen wird, und wobei der Cryptoprozessor (12), nachdem die elektrische Verbindung von dem SPI-Baustein (13) zu dem Cryptoprozessor (12) aufgebaut wurde, den Programmcode des Bootloaders der in dem SPI-Baustein gespeichert ist, überprüft.

## Claims

1. A method of securely booting a computer system (10) having a central processing unit (11), a crypto processor (12), a multiplexer (14) and an SPI module (13), the program code of the at least one boot loader being stored in the SPI module (13) and the central processing unit (11), the crypto processor (12) and the SPI module (13) being electrically connected to the multiplexer (14), the method comprising the following steps:
- switching the multiplexer (14), by the crypto processor (12), so that an electrical connection is established from the SPI module (13) to the central processing unit (11);
- executing the program code of the at least one boot loader to load a kernel after the step of switching the multiplexer (14), wherein the kernel is loaded by the central processing unit (11);
- switching the multiplexer (14), by the crypto processor (12), after the step of executing the program code of the at least one bootloader, and after the loading of the kernel has been started, so as to establish an electrical connection from the SPI module (13) to the crypto processor (12) and to interrupt the electrical connection between the SPI module (13) and the central processing unit (11);
- verifying, during loading of the kernel, the program code of the boot loader by the crypto processor (12) after the electrical connection between the SPI module (13) and the crypto processor (12) has been established and at least a part of the program code of the boot loader has been executed; and
- interrupting the booting, by the crypto processor (12), if a result of the verifying of the program code of the boot loader indicates a manipulation of the program code of the boot loader.

2. The method according to claim 1, wherein the step of verifying is executed after execution of the program code of the boot loader has been completed and at least a part of the kernel has been loaded.

3. The method according to any of claim 1 or 2, wherein the step of verifying is executed after a lapse of a predetermined time after loading of the kernel had been started.

4. The method according to any of claims 1 to 3, wherein the step of interrupting includes a stopping of the central processing unit (11).

5. A computer system (10) with a memory for a program code of a boot loader, a central processing unit (11) and a device that verifies the program code of the boot loader, wherein the central processing unit (11) is configured to execute the program code of the boot loader and to load a kernel, and wherein the device is electrically coupled with the memory and the central processing unit and is configured to perform, during loading of the kernel, a verification of the program code of the boot loader after at least a part of the program code of the boot loader has been executed, and to interrupt the booting of the computer system if a result of the verification of the program code of the boot loader indicates a manipulation of the program code of the boot loader,
wherein the device that verifies the program code of the boot loader comprises a crypto processor (12), wherein the computer system (10) comprises an SPI module (13), in which the memory is located, wherein the electric coupling of the device with the memory and the central processing unit (11) comprises a multiplexer, and
the central processing unit, the crypto processor and the SPI module are electrically connected to the multiplexer,
wherein the multiplexer is controlled by the crypto processor (12), so that an electrical connection is established from the SPI module (13) to the central processing unit (11),
wherein the program code of the at least one boot loader to load a kernel is executed after the switching of the multiplexer,
wherein the crypto processor is configured to control a switching of the multiplexer after the executing of the program code of the at least one boot loader and after the loading of the kernel has been started, so that an electrical connection is established from the SPI module (13) to the crypto processor (12) and the electrical connection between the SPI module (13) and the central processing unit (11) is interrupted, and
wherein the crypto processor (12), after the electrical connection from the SPI module (13) to the crypto processor (12) has been established, verifies the program code of the boot loader that is stored in the memory.

## Revendications

1. Procédé pour l'amorçage sûr d'un système informatique (10) avec un processeur principal (11), un cryptoprocesseur (12), un multiplexeur (14) et un composant SPI (13), sachant qu'un code de programme d'au moins un chargeur d'amorçage est enregistré dans le composant SPI (13) et le processeur principal (11), le cryptoprocesseur (12) et le composant SPI (13) sont raccordés électriquement au multiplexeur (14), sachant que le procédé comprend les étapes suivantes :
- commutation du multiplexeur (14) par le cryptoprocesseur (12) de sorte qu'une connexion électrique soit établie du composant SPI (13) au processeur principal (11) ;
- exécution du code de programme de l'au moins un chargeur d'amorçage pour charger un noyau après l'étape de commutation du multiplexeur, sachant que le noyau est chargé par le processeur principal (11) ;
- commutation du multiplexeur (14) par le cryptoprocesseur (12) après l'étape d'exécution du code de programme de l'au moins un chargeur d'amorçage, et après que le chargement du noyau a été démarré, de sorte qu'une connexion électrique soit établie du composant SPI (13) au cryptoprocesseur (12) et la connexion électrique entre le composant SPI (13) et le processeur principal (11) soit interrompue ;
- vérification, pendant que le noyau est chargé, du code de programme du chargeur d'amorçage par le cryptoprocesseur (12) après que la connexion électrique a été établie du composant SPI (13) au cryptoprocesseur (12) et au moins une partie du code de programme du chargeur d'amorçage a été exécutée ; et
- interruption de l'amorçage par le cryptoprocesseur (12) lorsqu'un résultat de la vérification du code de programme du chargeur d'amorçage signale une manipulation du code de programme du chargeur d'amorçage.

2. Procédé selon la revendication 1, sachant que l'étape de vérification est exécutée après qu'une exécution du code de programme du chargeur d'amorçage a été achevée et au moins une partie du noyau a été chargée.

3. Procédé selon l'une des revendications 1 ou 2, sachant que l'étape de vérification est exécutée après expiration d'un temps prédéterminé après que le chargement du noyau a été démarré.

4. Procédé selon l'une des revendications 1 à 3, sachant que l'étape d'interruption comprend un arrêt du processeur principal (11).

5. Système informatique (10) comportant une mémoire pour un code de programme d'un chargeur d'amorçage, un processeur principal (11) et un dispositif de vérification du code de programme du chargeur d'amorçage, sachant que le processeur principal (11) est configuré pour exécuter le code de programme du chargeur d'amorçage et pour charger un noyau, et sachant que le dispositif est couplé électriquement à la mémoire et au processeur principal (11) et est configuré pour exécuter une vérification du code de programme du chargeur d'amorçage après qu'au moins une partie du code de programme du chargeur d'amorçage a été exécutée et pendant que le noyau est chargé, et pour interrompre l'amorçage du système informatique (10) lorsqu'un résultat de la vérification du code de programme du chargeur d'amorçage signale une manipulation du code de programme du chargeur d'amorçage, sachant que le dispositif de vérification du code de programme du chargeur d'amorçage comprend un cryptoprocesseur (12), sachant que le système informatique (10) présente un composant SPI (13) dans lequel la mémoire est disposée, sachant que le couplage électrique du dispositif avec la mémoire et le processeur principal (11) comprend un multiplexeur, et le processeur principal, le cryptoprocesseur et le composant SPI sont raccordés électriquement au multiplexeur,
sachant que le multiplexeur est commuté par le cryptoprocesseur (12) de sorte qu'une connexion électrique soit établie du composant SPI (13) au processeur principal (11),
sachant que le code de programme de l'au moins un chargeur d'amorçage pour le chargement du noyau est exécuté après l'étape de commutation du multiplexeur,
sachant que le cryptoprocesseur (12) est configuré pour commuter le multiplexeur après l'étape d'exécution du code de programme de l'au moins un chargeur d'amorçage et après que le chargement du noyau a été démarré de sorte qu'une connexion électrique soit établie du composant SPI (13) au cryptoprocesseur (12) et la connexion électrique entre le composant SPI (13) et le processeur principal (11) soit interrompue, et sachant que le cryptoprocesseur (12), après que la connexion électrique a été établie du composant SPI (13) au cryptoprocesseur (12), vérifie le code de programme du chargeur d'amorçage qui est enregistré dans le composant SPI.
